# EUROPEAN PATENT SPECIFICATION

(11) **EP 0 517 513 B1**
(45) Date of publication and mention of the grant of the patent: **18.09.1996**
(21) Application number: 92305112.2
(22) Date of filing: 04.06.1992
(51) Int. Cl.: C09B 67/22, C09D 11/02, C09B 29/33

(54) **Production of pigments**
Herstellung von Pigmenten
Production de pigments

(30) Priority: 06.06.1991 GB 9112155
(43) Date of publication of application: 09.12.1992
(73) Proprietor: CIBA-GEIGY AG, 4002 Basel (CH)
(72) Inventor: Stirling, J. A., Glasgow, Scotland (GB)
(74) Representative: Sparrow, Kenneth D.

(56) References cited:
- EP-A- 0 029 009
- DE-A- 2 135 468
- FR-A- 2 091 301

## Description

The present invention relates to the production of pigments.

Printing inks, eg. liquid packaging inks, are based on a binder, eg. nitrocellulose dissolved in a solvent. The two main solvents used are ethyl acetate, or a mixture of ethyl acetate and ethanol.

Many conventional pigments are stable to flocculation in inks containing ethyl acetate/alcohol solvent, but flocculate badly in inks based on ethyl acetate.

There is a need in the pigment industry, therefore, for pigments which are stable to flocculation in inks irrespective of whether the ink contains ethyl acetate or ethyl acetate/ethanol, as solvents.

The present invention provides a process for the production of flocculation resistant pigments comprising after-treating an arylamide pigment, which has been subjected to a dyestuff treatment, the after-treatment comprising a further treatment of the dyestuff-treated arylamide pigment with an arylamide yellow dyestuff under alkaline conditions at elevated temperature.

The dyestuff-treated arylamide pigments which are to be subjected to the after-treatment of the present invention are well-known commercial materials. Their production is described, inter alia, in GB 1356253 and GB 1356254.

Examples of the base arylamide pigments are diarylide yellow pigments obtained by coupling 3,3¹-dichlorobenzidine (DCB), tetrachlorobenzidine or 3,3¹-dimethoxybenzidine, with acetoacetanilide or a derivative thereof. Specific examples of such diarylide yellow pigments are Pigment Yellow 12 (DCB coupled with acetoacetanilide); Pigment Yellow 13 (DCB coupled with acetoacet-m-xylidide); Pigment Yellow 14 (DCB coupled with acetoacet-o-toluidide); Pigment Yellow 17 (DCB coupled with acetoacet-o-anisidide); Pigment Yellow 55 (DCB coupled with acetoacet-p-toluidide); and Pigment Yellow 83 (DCB coupled with acetoacet-2:5-dimethoxy- 4-chloroanilide). Of these, Pigment Yellow 13 is the preferred arylamide pigment, when dyestuff-treated, for use in the process of the present invention.

The dyestuff treatment of the base arylamide pigment is a well-known technique which is described in GB 1356253. Thus 1-25%, preferably 1-10% by weight of a water-soluble azo dyestuff, based on the weight of pigment, is incorporated into the base arylamide pigment. As described in GB 1356253, the incorporation of the azo dyestuff may be effected by any of a number of procedures.

In one method, a stoichiometric excess of a coupling component precursor, which is common to both the pigment base and the additive, may be used, relative to the amount of the pigment tetrazo component precursor, eg. DCB; and a minor proportion of a tetrazotised sulphonated benzidine or tetrazotised carboxylated benzidine dye precursor, may be added a) to the said pigment tetazo component precursor, prior to the coupling reaction, b) to a portion of the common coupling component precursor before the coupling reaction or c) to the coupling reaction mixture during or after the coupling reaction.

In another method, a stoichiometric excess of a tetrazo component precursor, which is common to both the pigment base and the dye additive, may be used relative to the amount of the pigment coupling component; and a minor proportion of one or more dye coupling component precursors containing water-solubilizing groups, eg. acetoacetanilide-4-sulphonic acid.

A further mode of effecting the initial dyestuff-treatment of the base pigment is by adding one or more water-soluble azo dyestuffs to the tetrazotised base pigment precursor, before the base pigment is produced by coupling; or to a portion of the base coupling component precursor, prior to the coupling; or to the reaction mixture used to produce the base pigment, during or after the coupling; or to the previously-prepared base pigment. A further possibility is to conduct the coupling reaction to produce the base pigment in a solution containing the previously-prepared water-soluble azo dyestuff.

In such cases, the coupling component used to produce the water-soluble dyestuff may, be the same as, or different from that used to produce the base pigment. Likewise, the respective tetrazo components used to prepare the water-soluble dyestuff may the same as, or different from that used for the production of the base pigment.

The water-soluble azo dyestuff which is used to initially treat the base pigment is prepared by coupling a) a tetrazo component containing one or more water-solublilizing groups with a coupling component which is free from water-solubilizing groups; b) a tetrazo component which is free from water-solubilizing groups with a coupling component containing one or more water-solubilizing groups; or c) a tetrazo component and a coupling component each of which contains one or more water-solubilizing groups. Examples of such water-solubilizing groups are sulphonic acid groups and carboxylic acid groups and their water-soluble metal salts, especially alkali metal and alkaline earth metal salts, and ammonium salts; and amino groups or their salts with acids such as aliphatic acids. Coupling Method a) or b) is preferred.

Examples of tetrazo components which contain or or more water-solubilizing groups are those derived from diamines having the formula: 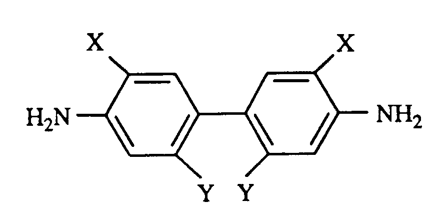 in which X and Y may be the same or different and each is hydrogen, methyl, SO₃H or a metal or ammonium salt thereof, or CO₂H or a metal or ammonium salt thereof, provided that at least one of X and Y is SO₃H, CO₂H or a salt thereof. Specific examples of such amines are 2,2¹-disulpho-benzidine and its mono-calcium, mono-barium- and di-sodium salts; 2,2¹-disulpho-3,3¹-dimethylbenzidine and its di-sodium salt; and 2,2¹-di-carboxy-benzidine and its di-sodium salt.

Examples of coupling components which contain one or more water-solubilizing groups are acetoacetanilide-4-sulphonic acid and acetoacetanilide-4-carboxylic acid or their respective water-soluble salts, eg. their sodium salts; and 4-amino-acetoacetanilide and its water-soluble salts eg. its acetate salt.

Examples of tetrazo and coupling components which are free of water-solubilizing groups, are those which have been described herein before as precursors for the base pigment. 3,3¹-Dichlorobenzidine (DCB) is the preferred such tetrazo component.

The characterizing feature of the process of the present invention is the further (after-treatment) of the dyestuff-treated pigment with an arylamide yellow dyestuff, under alkaline conditions at elevated temperature.

The arylamide yellow dyestuffs used in the process of the present invention are obtained by coupling a) a diazo component containing one or more water-solubilizing groups, with a coupling component which is free of water-solubilizing groups, b) a diazo component which is free from water-solubilizing groups with a coupling component containing one or more water-solubilizing groups, or c) a diazo component and a coupling component, each of which contains one or more water-solubilizing groups. Methods a) and b) are preferred, especially method a).

Examples of such water-solubilizing groups are the same as those listed hereinbefore in relation to the initial dyestuff-treatment of the base pigment.

Examples of diazo components containing one or more water-solubilizing groups are those derived from aniline derivatives containing one or two water-solubilizing groups selected from sulphonic acid , carboxylic acid and further amino groups and their respective water-soluble salts and optionally one or more non-water solubilizing groups such as C₁-C₄ alkyl, C₁-C₄ alkoxy, chloro or nitro groups. Specific examples of such aniline derivatives include, aniline, an aniline mono-sulphonic acid, an aniline mono-carboxylic acid, aniline-2,5-disulphonic acid, 2-nitroaniline-4-sulphonic acid and 2-amino-5-methylbenzene sulphonic acid, or their respective water-soluble salts.

Examples of coupling components containing one or more water-solubilizing groups are acetoacetanilide-4-sulphonic acid and its sodium salt, acetoacetanilide-4-carboxylic acid and its sodium salt and 4-amino-acetoacetanilide and its acetate salt.

Examples of diazo components and coupling components which are free of further water-solubilizing groups are aniline and acetoacetanilide, acetoacet-o-toluidide, acetoacet-p-toluidide, acetoacet-o-aniside, acetoacet-o-chloroanilide, acetoacet-2,4-xylidide and acetoacet-2,5-dimethoxy-4-chloroanilide.

The preferred arylamide yellow dyestuff for use in the process of the present invention is Pigment Yellow 62 (2-nitro-aniline-4-sulphonic acid coupled on to acetoacet-o-toluidide).

The amount of the arylamide yellow dyestuff which is used to after-treat the dyestuff-treated pigment is usually within the range of from 1 to 20%, preferably from 1 to 10% by weight, based on the weight of the dyestuff-treated pigment starting material.

The after-treatment with the arylamide yellow dyestuff is conducted at an alkaline pH and at elevated temperature. The pH value of the reaction mixture, during the after-treatment of the dyestuff-treated pigment with the arylamide yellow dyestuff, preferably ranges from 7 to 12, especially from 9 to 11. The temperature of the reaction mixture during the after-treatment preferably ranges from 50°C to the boiling point of the reaction mixture at atmospheric pressure, more especially 50°C to 100°C. The length of time during which the after-treatment is conducted preferably ranges from 20 minutes up to 5 hours, a period ranging from 30 minutes up to 2 hours being preferred.

Preferably, the after-treatment with the arylamide yellow dyestuff is combined with a conventional solvent treatment and with a conventional rosin treatment. These solvent and rosin treatments may also have been applied to the dyestuff- treated pigment starting material, prior to the after-treatment with the arylamide yellow dyestuff.

The solvent treatment procedure comprises treating an aqueous paste or aqueous suspension of the dyestuff-treatment pigment with a water-insoluble organic solvent. Preferably, the aqueous pigment paste or suspension is boiled with the solvent, and then the pigment is filtered off. Examples of such solvents include aromatic hydrocarbons, chlorinated hydrocarbons, esters, ethers, nitro compounds, nitriles and heterocyclic compounds, specific examples being tetralin, dibenzyl ether, o-dichlorobenzene, and dibutyl sebacate. Such solvent treatment imparts improved heat stability and flow properties to the treated pigment.

The rosination procedure comprises contacting an aqueous paste or aqueous suspension of the dyestuff-treated pigment with rosin or rosin derivative. Examples of such rosins are abietic acid and modified phenolic resins, resulting in pigments having improved flow properties.

If desired, the arylamide yellow dyestuff may be rendered insoluble, after it has been incorporated into the dyestuff-treated pigment by formation of an insoluble salt of a metal of Group IB, IIA, IIB, IIIA, IIIB or VIII of the Periodic Table of Elements. For example, the sodium salt of the arylamide yellow dyestuff component in the pigment may be contacted with a water-soluble salt of one of the specified metals at an alkaline pH. Suitable metal salts include zinc sulphate, barium chloride and calcium chloride.

EP 0029009 describes a process for producing monoazo or disazo pigments, which process comprises
(a) adding to a solution of a diazonium and/or tertrazonium salt of an aromatic or heterocyclic amine a solution of suspension containing 0.1-50% by weight of the theoretically required total weight of one or more coupling components, and
(b) completing the coupling reaction by adding the partially coupled product obtained according to step (a) to a solution or suspension of one or more coupling components idential to or different from those used in step (a).

The pigment produced by this two stage process may be after-treated with, for instance, water-soluble dyes.

There is no indication that an arylamide pigment which has been subjected to a dyestuff treatment may be after-treated with an arylamide yellow dyestuff to produce pigments having the desired stability to flocculation.

The following Examples further illustrate the present invention.

### Example 1

The following solutions are prepared:
Solution 1: 22.6 parts of 3,3¹-dichlorobenzidine are tetrazotised in 450 parts of water at 0°C.
Solution 2: 1.1 parts of 4,4¹-diamino biphenyl,-2,2¹-disulphonic acid are tetrazotised in 100 parts of water at 0°C.
Solution 3: 40 parts of 2,4-dimethyl acetoacetanilide are dissolved in a solution of 9.7 parts sodium hydroxide in 380 parts of water at 10°C.
Solution 4: 19.0 parts of acetic acid and 5.4 parts of hydrochloric acid are dissolved in 380 parts of water in a coupling vessel.

Solution 3 is added, dropwise, with good stirring, to solution 4 over 30 minutes, so that the pH at the end of the addition is slightly acidic.

Solution 1 is then added to the precipitated coupling component over at least 1 hour, so that no excess of tetrazo can be detected at any time, and the pH of the mixture is controlled throughout at 4.3 by additon of 10% sodium hydroxide solution.

Solution 2 is then added over 15 minutes showing no substantial quantity of excess tetrazo.

When coupling is complete, the following mixtures are prepared to effect an after-treatment.

Mixture A: 3.4 parts of dibutyl sebacate are emulsified in 50 parts water containing 0.34 parts of an ethoxylated nonyl phenol, as emulsifying agent.

Mixture B: 1.5 parts C.I. Pigment Yellow 62 are slurried in 10 parts of water to form a smooth paste.

Mixture C: 11.0 parts of a modified disproportionated rosin (Burez 9/18 ex Tenneco Chemicals) is dissolved in 3 parts of sodium hydroxide in 150 parts of water.

The after-treatment is carried out as follows:

The pH of the pigment slurry is raised to 10 with 10% sodium hydroxide solution, when mixture A and mixture B are added. The contents of the vessel are steam-heated to 95°C and held for 1 hour. Mixture C is then added, and after 5 minutes stirring, the pH is lowered to 5 by adddion of 10% hydrochloric acid solution.

The pigment composition so formed is filtered, washed substantially free of soluble salts with water and dried at 70°C.

The pigment composition so produced exhibits excellent flocculation stabilities in printing inks based on either ester/nitrocellulose or alcohol-rich/nitrocellulose solvent/binder systems.

### Examples 2 and 3

The procedure set out in Example 1 is repeated except that there is used, instead of solution 1, a solution of tetrachlorobenzidine or 3,3¹-dimethoxybenzidine.

The after-treated pigment so obtained has properties similar to those of the product of Example 1.

### Examples 4 and 5

The procedure outlined in Example 1 is repeated except that there is used, instead of solution 2, a solution of 2,2¹-disulpho-3,3¹-dimethylbenzide or 2,2¹-dicarboxybenzidine, respectively.

The after-heated pigment so obtained has properies in inks similar to those of the product of Example 1.

### Examples 6 to 11

The procedure described in Example 1 is repeated except that there is used, instead of solution 3, a solution of aceto-acetanilide, acetoacet-o-toluidide, acetoacet-p-toluidide, acetoacet-o-chloroanilide, acetoacet-o-aniside or acetoacet-2,5-dimethoxy-4-chloroanilide.

The product so produced has properties in inks similar to the properties of the product of Example 1.

### Example 12

The procedure described in Example 1 is repeated except that, instead of mixture B, there is used a slurry of 1.5g of C.I. Pigment Yellow 61.

The after-treated pigment so obtained has properties in inks similar to those of the product of Example 1.

## Claims

1. Process for the production of a flocculation-resistant pigment, comprising after-treating an arylamide pigment which has been subjected to a dyestuff treatment, the after-treatment comprising a further treatment of the dyestuff-treated arylamide pigment with an arylamide yellow dyestuff, under alkaline conditions at elevated temperature.

2. Process according to claim 1 in which the arylamide pigment is a diarylide yellow pigment, or an arylamide yellow pigment.

3. Process according to claim 2 in which the arylamide pigment is a diarylide yellow pigment produced by coupling 3,3¹-dichlorobenzidine, tetrachlorbenzidine or 3,3¹-dimethoxybenzidine with acetoacetanilide or a derivative thereof.

4. Process according to claim 3 in which the diarylide yellow pigment is Pigment Yellow 12, Pigment Yellow 13, Pigment Yellow 14, Pigment Yellow 17, Pigment Yellow 55, or Pigment Yellow 83.

5. Process according to any of the preceding claims in which the arylamide pigment has been treated with 1 to 25% by weight, based on the weight of pigment, of a water-soluble azo dyestuff.

6. Process according to claim 5 in which the water-soluble azo dyestuff is prepared by coupling a tetrazo component containing one or more water-solubilizing groups, with a coupling component which is free from water-solubilizing groups.

7. Process according to claim 6 in which the tetrazo component is derived from a diamine having the formula: 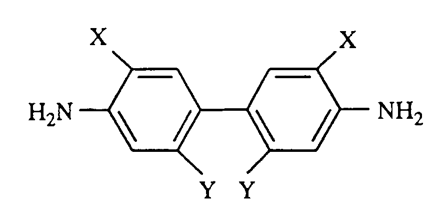 in which X and Y are the same or different and each is hydrogen, methyl, SO₃H or a metal or ammonium salt thereof, or CO₂H or a metal or ammonium salt thereof, provided that at least one of X and Y is SO₃H, CO₂H or a metal or ammonium salt thereof.

8. Process according to claim 7 in which the tetrazo component is derived from 2,2¹-disulphobenzidine; 2,2¹-disulpho-3,3¹-dimethylbenzidine; or 2,2¹-dicarboxybenzidine or their mono-calcium, mono-barium, or di-sodium salts.

9. Process according to claim 5 in which the water-soluble azo dyestuff is prepared by coupling a tetrazo component which is free from water-solubilizing groups with a coupling component containing one or more water-solubilizing groups.

10. Process according to claim 9 in which the tetrazo component is 3,3¹-dichlorobenzidine.

11. Process according to claim 9 or 10 in which the coupling component containing one or more water-solubilizing groups is acetoacetanilide-4-sulphonic acid or acetoacetanilide-4-carboxylic acid or their respective water-soluble salts; or 4-amino-acetanilide or its water-soluble salts.

12. Process according to any of the preceding claims in which the arylamide yellow dyestuff is obtained by coupling a diazo component containing one or more water-solubilizing groups, with a coupling component which is free of water-solubilizing groups.

13. Process according to claim 12 in which the diazo component is an aniline derivative containing one or two water-solubilizing groups selected from sulphonic acid, carboxylic acid and further amino groups and their respective water-soluble salts and, optionally, one or more non-water-solubilizing groups.

14. Process according to claim 13 in which the non-water-solubilizing groups are selected from C₁-C₄ alkyl, C₁-C₄ alkoxy, chloro and nitro groups.

15. Process according to any of claims 12 to 14 in which the diazo component is aniline, an aniline mono-sulphonic acid, an aniline mono-carboxylic acid, aniline-2,5-disulphonic acid, 2-nitroaniline-4-sulphonic acid, 2-amino-5-methylbenzene sulphonic acid, or their respective water-soluble salts.

16. Process according to any of claims 6 to 8 or 12 to 15 in which the coupling component is acetoacetanilide, acetoacet-o-toluidide, acetoacet-p-toluidide, acetoacet-o-aniside, acetoacet-o-chloranilide, acetoacet-2,4-xylidide or acetoacet-2,5-dimethoxy-4-chloranilide.

17. Process according to any of the preceding claims in which the amount of arylamide yellow dyestuff used to after-treat the dyestuff-treated pigment ranges from 1 to 20% by weight, based on the weight of the dyestuff-treated pigment.

18. Process according to any of the preceding claims in which the after-treatment with the arylamide yellow dyestuff is conducted at a pH ranging from 7 to 12.

19. Process according to any of the preceding claims in which the after-treatment with the arylamide yellow dyestuff is conducted in combination with a solvent treatment and a rosin treatment.

20. Process according to claim 19 in which the solvent used is an aromatic hydrocarbon, a chlorinated hydrocarbon, an ester, an ether, a nitro compound, a nitrile or a heterocyclic compound.

21. Process according to claim 20 in which the solvent is tetralin, dibenzyl ether, o-dichlorobenzene or dibutyl phthalate.

22. Process according to claim 19 in which the rosin is abietic acid or a modified phenol.

23. Process according to any of the preceding claims in which the arylamide yellow dyestuff, after use in the after-treatment of the dyestuff-treated pigment, is rendered insoluble by conversion into an insoluble salt of a metal of Group IB, IIA, IIB, IIIA, IIIB or VIII of the Periodic Table of Elements.

24. Printing ink comprising a flocculation-resistant pigment produced by a process claimed in claim 1.

25. Printing ink according to claim 24 which is a liquid packaging ink, based on nitrocellulose binder and ethyl acetate or ethyl acetate/ethanol solvent, comprising a pigment produced by a process claimed in claim 1.

## Patentansprüche

1. Verfahren zur Herstellung eines flockungsbeständigen Pigments, umfassend Nachbehandlung eines Arylamidpigments, das einer Farbstoffbehandlung unterzogen wurde, wobei die Nachbehandlung eine zusätzliche Behandlung des farbstoffbehandelten Arylamidpigments mit einem Arylamidgelbfarbstoff umfaßt, unter alkalischen Bedingungen bei erhöhter Temperatur.

2. Verfahren nach Anspruch 1, wobei das Arylamidpigment ein Diarylidgelbpigment oder ein Arylamidgelbpigment ist.

3. Verfahren nach Anspruch 2, wobei das Arylamidpigment ein Diarylidgelbpigment ist, hergestellt durch Kuppeln von 3,3¹-Dichlorbenzidin, Tetrachlorbenzidin oder 3,3¹⁻Dimethoxybenzidin mit Acetoacetanilid oder einem Derivat davon.

4. Verfahren nach Anspruch 3, wobei das Diarylidgelbpigment Pigment Yellow 12, Pigment Yellow 13, Pigment Yellow 14, Pigment Yellow 17, Pigment Yellow 55 oder Pigment Yellow 83 ist.

5. Verfahren nach einem der vorangehenden Ansprüche, wobei das Arylamidpigment mit 1 bis 25 Gewichtsprozent, bezogen auf das Pigmentgewicht, eines wasserlöslichen Azofarbstoffs behandelt wurde.

6. Verfahren nach Anspruch 5, wobei der wasserlösliche Azofarbstoff durch Kuppeln einer Tetrazokomponente, die ein oder mehrere wasserlöslich machende Gruppen enthält, mit einer Kupplungskomponente, die frei von wasserlöslich machenden Gruppen ist, hergestellt wird.

7. Verfahren nach Anspruch 6, wobei die Tetrazokomponente abgeleitet ist von einem Diamin der Formel: 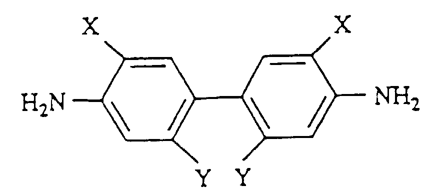 worin X und Y gleich oder verschieden sind und jeweils Wasserstoff, Methyl, SO₃H oder ein Metall- oder Ammoniumsalz davon oder CO₂H oder ein Metall- oder Ammoniumsalz davon bedeuten, mit der Maßgabe, daß mindestens einer von X und Y SO₃H, CO₂H oder ein Metall- oder Ammoniumsalz davon ist.

8. Verfahren nach Anspruch 7, wobei die Tetrazokomponente abgeleitet ist von 2,2¹-Disulfobenzidin; 2,2¹-Disulfo-3,3¹-dimethylbenzidin oder 2,2¹-Dicarboxybenzidin oder deren Mono-Calcium-, Mono-Barium- oder Dinatriumsalzen.

9. Verfahren nach Anspruch 5, wobei der wasserlösliche Azofarbstoff hergestellt wird durch Kuppeln einer Tetrazokomponente, die frei von wasserlöslich machenden Gruppen ist, mit einer Kupplungskomponente, die ein oder mehrere wasserlöslich machende Gruppen enthält.

10. Verfahren nach Anspruch 9, wobei die Tetrazokomponente 3,3¹-Dichlorbenzidin ist.

11. Verfahren nach Anspruch 9 oder 10, wobei die Kupplungskomponente, die eine oder mehrere wasserlöslich machende Gruppen enthält, Acetoacetanilid-4-sulfonsäure oder Acetoacetanilid-4-carbonsäure oder deren betreffende wasserlösliche Salze, oder 4-Amino-acetanilid oder dessen wasserlösliche Salze ist.

12. Verfahren nach einem der vorangehenden Ansprüche, wobei der Arylamidgelbfarbstoff durch Kuppeln einer Diazokomponente, die eine oder mehrere wasserlöslich machende Gruppen enthält, mit einer Kupplungskomponente, die frei von wasserlöslich machenden Gruppen ist, erhalten wird.

13. Verfahren nach Anspruch 12, wobei die Diazokomponente ein Anilinderivat ist, das ein oder zwei wasserlöslich machende Gruppen, ausgewählt aus Sulfonsäure, Carbonsäure und weiteren Aminogruppen und deren entsprechenden wasserlöslichen Salzen und gegebenenfalls ein oder mehrere nicht wasserlöslich machende Gruppen, enthält.

14. Verfahren nach Anspruch 13, wobei die nicht wasserlöslich machenden Gruppen ausgewählt sind aus C₁-C₄-Alkyl-, C₁-C₄-Alkoxy-, Chlor- und Nitrogruppen.

15. Verfahren nach einem der Ansprüche 12 bis 14, wobei die Diazokomponente Anilin, eine Anilinmonosulfonsäure, eine Anilinmonocarbonsäure, Anilin-2,5-disulfonsäure, 2-Nitroanilin-4-sulfonsäure, 2-Amino-5-methylbenzolsulfonsäure oder deren betreffende wasserlösliche Salze ist.

16. Verfahren nach einem der Ansprüche 6 bis 8 oder 12 bis 15, wobei die Kupplungskomponente Acetoacetanilid, Acetoacet-o-toluidid, Acetoacet-p-toluidid, Acetoacet-o-anisid, Acetoacet-o-chloranilid, Acetoacet-2,4-xylidid oder Acetoacet-2,5-dimethoxy-4-chloranilid ist.

17. Verfahren nach einem der vorangehenden Ansprüche, wobei die Menge an Arylamidgelbfarbstoff, die zur Nachbehandlung des farbstoffbehandelten Pigments verwendet wird, im Bereich 1 bis 20 Gewichtsprozent, bezogen auf das Gewicht an farbstoffbehandeltem Pigment, liegt.

18. Verfahren nach einem der vorangehenden Ansprüche, wobei die Nachbehandlung mit dem Arylamidgelbfarbstoff bei einem pH-Wert im Bereich 7 bis 12 ausgeführt wird.

19. Verfahren nach einem der vorangehenden Ansprüche, wobei die Nachbehandlung mit dem Arylamidgelbfarbstoff in Kombination mit einer Lösungsmittelbehandlung und einer Naturharzbehandlung ausgeführt wird.

20. Verfahren nach Anspruch 19, wobei das verwendete Lösungsmittel ein aromatischer Kohlenwasserstoff, ein chlorierter Kohlenwasserstoff, ein Ester, ein Ether, eine Nitroverbindung, ein Nitril oder eine heterocyclische Verbindung ist.

21. Verfahren nach Anspruch 20, wobei das Lösungsmittel Tetralin, Dibenzylether, o-Dichlorbenzol oder Dibutylphthalat ist.

22. Verfahren nach Anspruch 19, wobei das Naturharz Abietinsäure oder ein modifiziertes Phenol ist.

23. Verfahren nach einem der vorangehenden Ansprüche, wobei der Arylamidgelbfarbstoff nach Verwendung bei der Nachbehandlung des farbstoffbehandelten Pigments durch Umwandlung in ein unlösliches Salz eines Metalls der Gruppe IB, IIA, IIB, IIIA, IIIB oder VIII des Periodensystems der Elemente unlöslich gemacht wird.

24. Druckfarbe, umfassend ein flockungsbeständiges Pigment, hergestellt durch ein Verfahren nach Anspruch 1.

25. Druckfarbe nach Anspruch 24, nämlich eine flüssige Verpackungsdruckfarbe, auf der Grundlage eines Nitrozellulose-Bindemittels und Essigsäureethylester oder Essigsäureethylester/Ethanol-Lösungsmittels, umfassend ein nach einem Verfahren von Anspruch 1 hergestelltes Pigment.

## Revendications

1. Procédé pour la production d'un pigment résistant à la floculation comprenant le post-traitement d'un pigment arylamidique que l'on a soumis à un traitement par matière colorante, le post-traitement comprenant un traitement ultérieur du pigment arylamidique traité par matière colorante avec une matière colorante jaune arylamidique dans des conditions alcalines à température élevée.

2. Procédé selon la revendication 1, dans lequel le pigment arylamidique est un Pigment Jaune diarylidique ou un Pigment Jaune arylamidique.

3. Procédé selon la revendication 2, dans lequel le pigment arylamidique est un pigment jaune diarylidique obtenu par réaction de couplage de la 3,3'-dichlorobenzidine, de la tétrachlorobenzidine ou de la 3,3'-diméthoxybenzidine avec de l'acétoacétanilide ou l'un de ses dérivés.

4. Procédé selon la revendication 3, dans lequel le pigment jaune diarylamidique est le Pigment Jaune 12, le Pigment Jaune 13, le Pigment Jaune 14, le Pigment Jaune 17, Pigment Jaune 55 ou le Pigment Jaune 83.

5. Procédé selon l'une quelconque des revendications précédentes, dans lequel on a traité le pigment arylamidique avec 1 à 25% en poids, sur la base du poids du pigment, par une matière colorante azoïque hydrosoluble.

6. Procédé selon la revendication 5, dans lequel on prépare la matière colorante azoïque hydrosoluble par une réaction de couplage d'un composé tétrazoïque contenant un ou plusieurs groupes hydrosolubles avec un composé de couplage qui est dépourvu de groupes hydrosolubles.

7. Procédé selon la revendication 6, dans lequel le composé tétrazoïque est dérivé d'une diamine ayant la formule : 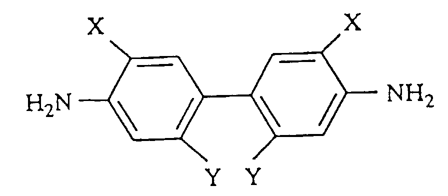 dans laquelle X et Y sont identiques ou différents et chacun est un atome d'hydrogène, un groupe méthyle, un groupe SO₃H ou l'un de ses sels de métal ou d'ammonium ou un groupe CO₂H ou l'un de ses sels de métal ou d'ammonium, à la condition qu'au moins un de X et Y soit SO₃H, CO₂H ou l'un de leurs sels de métal ou d'ammonium.

8. Procédé selon la revendication 7, dans lequel le composé tétrazoïque est un dérivé de la 2,2'-disulfobenzidine, de la 2,2'-disulfo-3,3'-diméthylbenzidine ou de la 2,2'-dicarboxybenzidine ou leurs sels monocalcique, monobaryque ou disodique.

9. Procédé selon la revendication 5, dans lequel on prépare la matière colorante azoïque hydrosoluble par une réaction de couplage d'un composé tétrazoïque qui est dépourvu de groupes hydrosolubles avec un composé de couplage contenant un ou plusieurs groupes hydrosolubles.

10. Procédé selon la revendication 9, dans lequel le composé tétrazoïque est la 3,3'-dichlorobenzidine.

11. Procédé selon la revendication 9 ou 10, dans lequel le composé de couplage contenant un ou plusieurs groupes hydrosolubles est l'acide acétoacétanilide-4-sulfonique, l'acide acétoacétanilide-4-carboxylique ou leurs sels hydrosolubles respectifs, ou la 4-aminoacétanilide ou ses sels hydrosolubles.

12. Procédé selon l'une quelconque des revendications précédentes, dans lequel on obtient la matière colorante jaune arylamidique par couplage d'un composé diazoïque contenant un ou plusieurs groupes hydrosolubles, avec un composé de couplage qui est dépourvu de groupe hydrosoluble.

13. Procédé selon la revendication 12, dans lequel le composé diazoïque est un dérivé de l'aniline contenant un ou deux groupes hydrosolubles choisis entre l'acide sulfonique, l'acide carboxylique et d'autres groupes amino et leurs sels hydrosolubles respectifs et, facultativement, un ou plusieurs groupes non hydrosolubles.

14. Procédé selon la revendication 13, dans lequel on choisi les groupes non hydrosolubles parmi les groupes alkyle en C₁-C₄, alcoxyle en C₁-C₄ et les groupes chloro et nitro.

15. Procédé selon l'une quelconque des revendications 12 à 14, dans lequel le composé diazoïque est l'aniline, un acide aniline-monosulfonique, un acide aniline-monocarboxylique, l'acide amino-2,5-disulfonique, l'acide 2-nitroaniline-4-sulfonique, l'acide 2-amino-5-méthylbenzènesulfonique ou leurs sels hydrosolubles respectifs.

16. Procédé selon l'une quelconque des revendications 6 à 8 ou 12 à 15, dans lequel le composé de couplage est l'acétoacétanilide, l'acétoacét-o-toluidine, l'acétoacét-p-toluidine, l'acétoacét-o-aniside, l'acétoacét-o-chloranilide, l'acétoacét-2,4-xylidine ou l'acétoacét-2,5-diméthoxy-4-chloranilide.

17. Procédé selon l'une quelconque des revendications précédentes, dans lequel la quantité de matière colorante jaune arylamidique que l'on utilise pour post-traiter le pigment traité par matière colorante est comprise dans la plage de 1 à 20% en poids, sur la base du poids du pigment traité par matière colorante.

18. Procédé selon l'une quelconque des revendications précédentes, dans lequel on effectue le post-traitement avec la matière colorante jaune arylamidique à une valeur de pH comprise dans la plage de 7 à 12.

19. Procédé selon l'une quelconque des revendications précédentes, dans lequel on effectue le post-traitement avec la matière colorante jaune arylamidique en combinaison avec un traitement par solvant et un traitement par colophane.

20. Procédé selon la revendication 19, dans lequel le solvant utilisé est un hydrocarbure aromatique, un hydrocarbure chloré, un ester, un éther, un composé nitro, un composé nitrile ou hétérocyclique.

21. Procédé selon la revendication 20, dans lequel le solvant est la tétraline, l'éther dibenzylique, l'o-dichlorobenzène ou le phtalate de dibutyle.

22. Procédé selon la revendication 19, dans lequel le dérivé de la colophane est l'acide abiétique ou un phénol modifié.

23. Procédé selon l'une quelconque des revendications précédentes, dans lequel on rend la matière colorante jaune arylamidique, après utilisation dans le post-traitement du pigment traité par matière colorante, insoluble par conversion en un sel insoluble d'un métal des groupes IB, IIA, IIB, IIIA, IIIB ou VIII du tableau périodique des éléments.

24. Encre d'impression comprenant un pigment résistant à la floculation produite par un procédé selon la revendication 1.

25. Encre d'impression selon la revendication 24, qui est une encre présentée sous forme liquide sur la base d'un liant de nitrocellulose et d'un solvant d'acétate d'éthyle ou d'acétate d'éthyle/éthanol comprenant un pigment produit par un procédé selon la revendication 1.
